# EUROPEAN PATENT APPLICATION

(11) **EP 4 567 982 A1**
(43) Date of publication of application: **11.06.2025**
(21) Application number: 24211222.5
(22) Date of filing: 06.11.2024
(51) Int. Cl.: H01M 50/204, H01M 50/249, H01M 50/264

(54) **BATTERY PACK**

(30) Priority: 27.11.2023 KR 20230166925
(71) Applicant: SAMSUNG SDI CO., LTD., Yongin-si, Gyeonggi-do 17084 (KR)
(72) Inventor: AHN, Janggun, 17084 Yongin-si, Gyeonggi-do (KR); PARK, Junmo, 17084 Yongin-si, Gyeonggi-do (KR); JUNG, Jiwon, 17084 Yongin-si, Gyeonggi-do (KR)
(74) Representative: Bardehle Pagenberg Partnerschaft mbB Patentanwälte Rechtsanwälte

(57) **Abstract**

A battery pack includes a frame portion forming an accommodation space, a plurality of battery modules positioned in the accommodation space of the frame portion, a lower cover that covers a lower portion of the frame portion, and an upper cover that covers an upper portion of the frame portion. Each of the battery modules includes a plurality of battery cells, a plurality of side plates that include bent portions that are coupled to the frame portion and support side surfaces of the battery cells, and a plurality of end plates that connect ends of each of the side plates to each other.

## Description

### BACKGROUND OF THE INVENTION

### (a) Field of the Invention

The present disclosure relates to a battery pack with enhanced structural rigidity of a frame portion of a battery module.

### (b) Description of the Related Art

A secondary battery (or a rechargeable battery) is widely used in a mobile device, an auxiliary electric power device, or the like. In addition, secondary batteries are also attracting attention as a main power source for an electric vehicle, a hybrid electric vehicle, a plug-in hybrid electric vehicle, or the like, which are proposed as alternatives to conventional and diesel vehicles to solve various problems such as air pollution.

In the electric vehicle or the like, a battery module in which a plurality of battery cells are stacked and then electrically connected in series and in parallel is used due to a need for a high-output and large-capacity battery. The battery cells are stacked in the battery module, and terminals exposed at both ends of each battery cell are electrically connected to provide a high voltage.

A frame constituting an outer wall of the battery module uses aluminum and stainless steel (SUS) that can be welded and do not generate rust. A material of a side plate is determined according to a shape and a material of an end plate with a surface where a swelling force and a compression force required for assembly act in one direction according to a direction in which the battery cell is disposed. If the end plate and the side plate are made of different materials, a same material may be included inside the plate in a special case because welding does not reach a required strength.

In a long battery module having a predetermined length or more, the battery module may have a flange shape protruding from a side surface thereof so as to be fixed to a frame portion of a battery pack at a plurality of positions. In the long battery module, the flange requires sufficient thickness and rigidity to fix the module with a relatively heavy volume.

### SUMMARY OF THE INVENTION

In accordance with the present invention a battery pack, as set forth in independent claim 1, is provided. Preferred embodiments of the invention are described in the dependent claims.

Embodiments of the present disclosure provide a battery pack in which structural rigidity of a frame supporting battery cells of a battery module is strengthened and a space efficiency of a battery is improved by reducing a thickness when a battery module using roll forming is manufactured.

A battery pack according to embodiments of the present disclosure includes: a frame portion forming an accommodation space; a plurality of battery modules positioned in the accommodation space of the frame portion; a lower cover that covers a lower portion of the frame portion; and an upper cover that covers an upper portion of the frame portion. Each of the battery modules includes: a plurality of battery cells; a plurality of side plates including bent portions that are coupled to the frame portion and support side surfaces of the plurality of battery cells; and a plurality of end plates that connect ends of the side plates to each other.

Each of the side plates may include an inner surface that supports the side surfaces of the battery cells, and each of the side plates may be bent along an upper edge to form a folded portion that is in contact with a surface of the side plate.

The folded portion may be welded to the surface of the side plate.

An end portion of the folded portion may include a bent portion protruding from the side plate.

Each of the bent portions may include a plurality of screw holes and a plurality of cutout portions may be formed between the plurality of screw holes, and fastening members may be inserted into the screw holes to fix the bent portion to the frame portions.

The cutout portions may be formed in trapezoidal shapes.

Each of the side plates may include bending support portion formed at a lower portion of the side plate that supports a lower surface of the battery module.

Each of the side plates may be roll formed.

An insulating film may be attached to a surface of the side plate facing the battery cells.

Each of the side plates may include a side surface that supports the side surfaces of the battery cells, and the side surface may include a bent connection portion that is bent and protrudes in a direction away from the side surfaces of the battery cells.

An avoiding bent portion may be formed at an upper edge of each of the side plates, with the avoiding bent portion being bent in the direction away from the side surfaces of the battery cells.

A portion of one side surface of each of the side plates may be connected to the side surfaces of the battery cells using an adhesive, and each of the side plates may include an adhesive bent portion that is spaced apart from the side surfaces of the battery cells at a portion of the side plate where the adhesive is applied.

Each of the side plates may include a first side surface that supports the side surfaces of the battery cells and a second side surface that is coupled to a connection flange coupled to the frame portion, and the connection flange may include a connection plate coupled to the second side surface of the side plate and a connection protruding portion protruding in a direction away from the side plate to be coupled to the frame portion.

A portion of each of the side plates to which the connection plates may be coupled may be bent so that a bonding bent portion spaced apart from the side surfaces of the battery cells is formed.

An adhesive may be applied between the bonding bent portion and the side surfaces of the battery cells.

The side plates may include: a first side portion that includes a side surface supporting the side surfaces of the battery cells, wherein an upper end of the first side portion includes a first bent outward portion that is bent in a direction away from the battery cells; and a second side portion that is coupled to an upper end of the first side portion, wherein a lower end of the second side portion includes a second bent outward portion that is bent outward in the direction away from the battery cells and is coupled to the first bent outward portion.

The first side portion and the second side portion may be roll formed.

The battery pack may further include an insulating plate that includes a first end connected to a side surface of one of the end plates, a second end connected to a side surface of another one of the end plates, and side surfaces supporting the side surfaces of the battery cells.

The insulating plate may include: a first insulating plate that includes ends connected to side surfaces of the end plates to support the side surfaces of the battery cells; and a second insulating plate that includes a portion welded to a side surface of the first insulating plate and ends connected to the side surfaces of the end plates to support the side surfaces of the battery cells.

The first insulating plate may be bent along a lower edge thereof to form a first bending support portion supporting a lower surface of the battery module, and the second insulating plate may be bent along the lower edge thereof to form a second bending support portion supporting the lower surface of the battery module.

A first upper bent portion may be formed at an upper portion of the first insulating plate and a first lower bent portion may be formed at a lower portion of the first insulating plate, a second upper bent portion may be formed at an upper portion of the second insulating plate and a second lower bent portion may be formed at a lower portion of the second insulating plate, and the first upper bent portion and the second upper bent portion may be welded to each other and the first lower bent portion and the second lower bent portion may be welded to each other.

The first insulating plate and the second insulating plate may be roll formed.

The side plates may be made of stainless steel.

An insulating film may be attached to one or more inner surfaces of one or more of the side plates.

According to the embodiments of the present disclosure, a side plate supporting a battery cell may be formed of a SUS material or a steel material and rigidity of a plate portion where a battery module is connected to a frame portion may be improved such that durability thereof is improved.

According to the embodiments of the present disclosure, the side plate supporting the battery module may be manufactured using a roll forming method. Thus, it is possible to prevent increases in costs due to enlargement of a facility required for a battery module and thereby prevent increased facility investment costs.

### BRIEF DESCRIPTION OF THE DRAWINGS

FIG. 1 is a perspective view schematically showing a battery pack according to a first embodiment of the present disclosure.
FIG. 2 is an exploded perspective view schematically showing the battery pack of FIG. 1.
FIG. 3 is a perspective view schematically showing a battery module according to the first embodiment of the present disclosure.
FIG. 4 is a perspective view schematically showing a state in which a side plate and end plates of the battery module of FIG. 3 are coupled to each other.
FIG. 5 is a perspective view schematically showing the side plate according to the first embodiment of the present disclosure.
FIG. 6 is a main portion perspective view schematically showing a portion of the side plate of FIG. 5.
FIG. 7 is a cross-sectional view schematically showing the side plate of FIG. 5.
FIG. 8 is a cross-sectional view schematically showing an insulating plate according to the first embodiment of the present disclosure.
FIG. 9 is a cross-sectional view schematically showing a side plate according to a second embodiment of the present disclosure.
FIG. 10 is a cross-sectional view schematically showing a side plate according to a third embodiment of the present disclosure.
FIG. 11 is a cross-sectional view schematically showing a side plate according to a fourth embodiment of the present disclosure.
FIG. 12 is a cross-sectional view schematically showing a side plate according to a fifth embodiment of the present disclosure.
FIG. 13 is a cross-sectional view schematically showing a side plate according to a sixth embodiment of the present disclosure.
FIG. 14 is a cross-sectional view schematically showing a side plate according to a seventh embodiment of the present disclosure.
FIG. 15 is a cross-sectional view schematically showing a side plate according to an eighth embodiment of the present disclosure.
FIG. 16 is a cross-sectional view schematically showing a side plate according to a ninth embodiment of the present disclosure.
FIG. 17 is a plan view schematically showing a battery module in a state in which a cutout portion is formed at a side plate according to a tenth embodiment of the present disclosure.
FIG. 18 is a main portion perspective view schematically showing a state in which the side plate with the cutout portion of FIG. 17 is installed.

### DETAILED DESCRIPTION OF THE EMBODIMENTS

Embodiments of the present disclosure will be described more fully hereinafter with reference to the accompanying drawings so that those skilled in the art easily implement the embodiments. The present disclosure may be modified in various different ways, all without departing from the spirit or scope of the present disclosure. In order to clearly describe the present disclosure, parts or portions that are irrelevant to the description are omitted in the drawings, and identical or similar constituent elements throughout the specification are denoted by the same reference numerals.

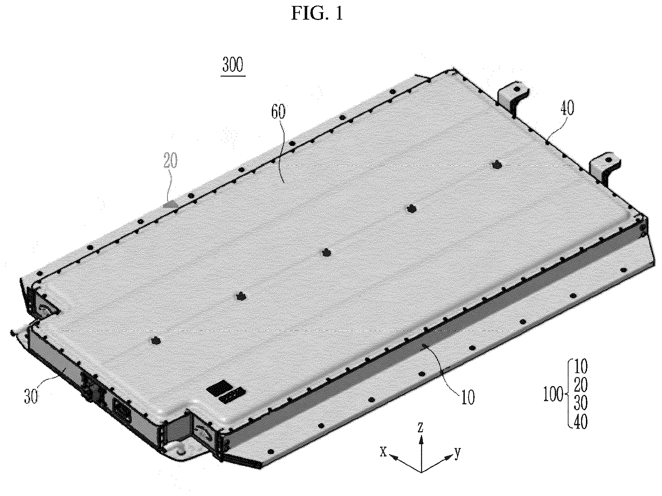

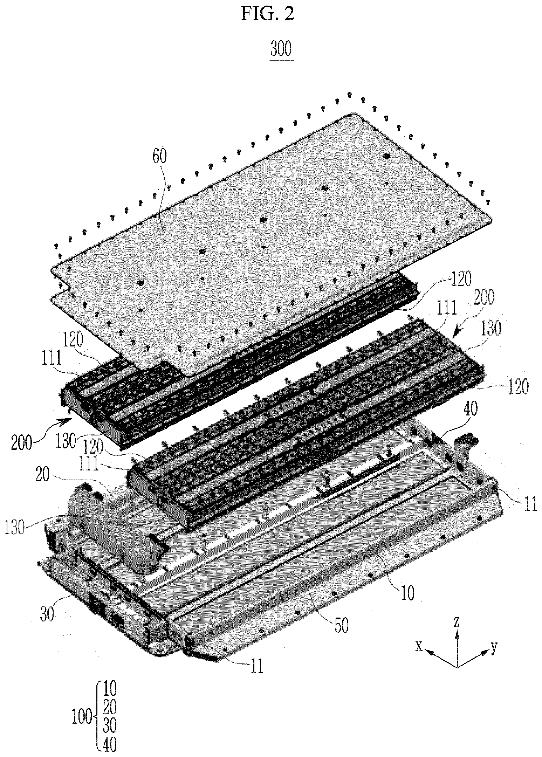

FIG. 1 is a perspective view schematically showing a battery pack according to a first embodiment of the present disclosure, and FIG. 2 is an exploded perspective view schematically showing the battery pack of FIG. 1.

As shown in FIG. 1 and FIG. 2, the battery pack 300 according to the first embodiment of the present disclosure may include a frame portion 100 in which a plurality of frames are coupled to each other and an accommodation space is formed therein. A plurality of battery modules 200 are inserted into the accommodation space of the frame portion 100, a lower cover 50 covers a lower portion of the frame portion 100, and an upper cover 60 covers an upper portion of the frame portion 100.

The frame portion 100 may include a first side frame 10 and a second side frame 20. A first end frame 30 and a second end frame 40 connect the first side frame 10 and the second side frame 20 to each other. The first side frame 10 may be coupled to one edge of the lower cover 50, and may be installed to support one side of the plurality of battery modules 200. The second side frame 20 may be coupled to the other edge of the lower cover 50 and may be installed to support the other side of the plurality of battery modules 200.

The first end frame 30 may be installed to connect one end of the first side frame 10 and one end of the second side frame 20. For example, one end of the first end frame 30 may be connected to the one end of the first side frame 10 by a fastening member 11, and the other end of the first end frame 30 may be connected to the one end of the second side frame 20 by the fastening member 11.

The second end frame 40 may be installed to connect the other end of the first side frame 10 and the other end of the second side frame 20. For example, one end of the second end frame 40 may be connected to the other end of the first side frame 10 by the fastening member 11, and the other end of the second end frame 40 may be connected to the other end of the second side frame 20 by the fastening member 11.

The accommodation space may be formed inside the frame portion 100 such that the battery module 200 may be installed inside the accommodation space. The lower cover 50 may be coupled to the lower portion of the frame portion 100 and the upper cover 60 may be coupled to the upper portion of the frame portion 100, so that a battery cell 111 accommodated inside the frame portion 100 is supported.

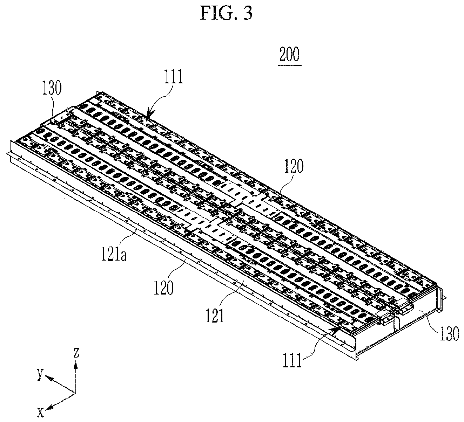

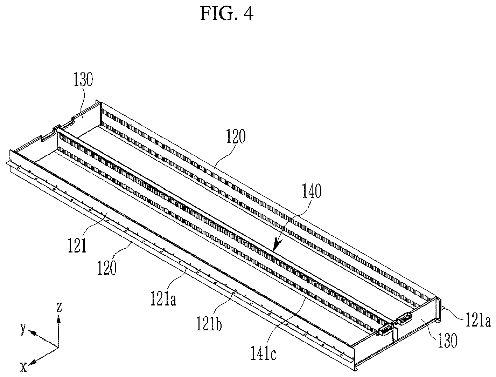

FIG. 3 is a perspective view schematically showing the battery module according to the first embodiment of the present disclosure, and FIG. 4 is a perspective view schematically showing a state in which a side plate and end plates of the battery module of FIG. 3 are coupled to each other.

As shown in FIG. 3 and FIG. 4, the battery module 200 may include a plurality of battery cells 111, a plurality of side plates 120 that support side surfaces of the plurality of battery cells 111 and are bent so that a portion of the side surface is coupled to the frame portion 100, and a plurality of end plates 130 connecting both ends of each of the plurality of side plates 120 to each other. The plurality of side plates 120 may be installed to support the side surfaces of the plurality of battery cells 111. The plurality of side plates 120 may include a first side plate and a second side plate that respectively support both opposing sides of the plurality of battery cells 111. In the first embodiment, the side plate, the first side plate, and the second side plate use the same reference numeral 120. That is, the first and second side plates 120 may be installed with the same size and shape, and hereinafter, the first and second side plates use the same reference numeral 120.

The end plate 130 may be installed to connect both ends of each of the first and second side plates 120 to each other. The end plate may include first and second end plates 130. The first and second end plates may be installed with the same size and shape, and hereinafter, the first and second end plates use the same reference numeral 130.

A portion of an edge of the side plate 120 along a length direction may be folded in a direction of one side surface. The side plate 120 may be installed to secure structural rigidity. In some embodiments, a portion of the side plate 120 may be folded to enable an overlapping configuration of the plate so that the structural rigidity is secured. In the present embodiment, the side plate 120 may be formed of a SUS material or a steel material. In the present embodiment, an insulating plate 140 as shown in FIG. 4 may be installed at a position between rows of the plurality of battery modules 200 (further described below).

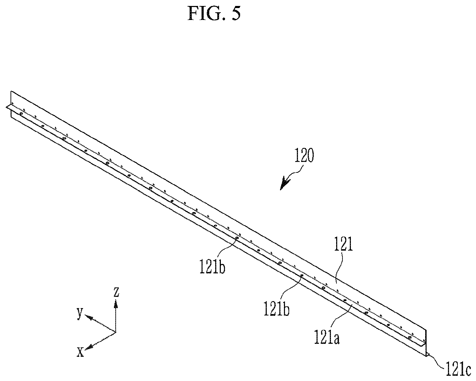

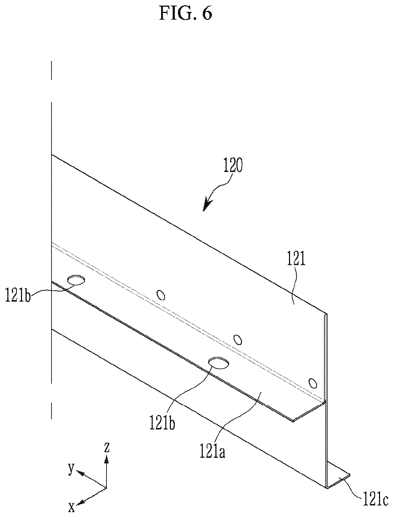

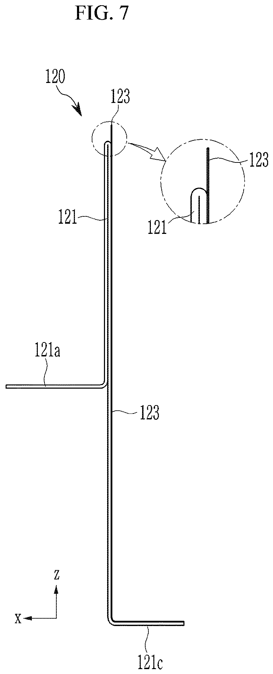

FIG. 5 is a perspective view schematically showing the side plate according to the first embodiment of the present disclosure, FIG. 6 is a main portion perspective view schematically showing a portion of the side plate of FIG. 5, and FIG. 7 is a cross-sectional view schematically showing the side plate of FIG. 5.

Referring to FIGS. 5 to 7, the side plate 120 may have an inner surface that supports the side surfaces of the plurality of battery cells 111, and the side plate 120 may include a folding portion 121 that includes a portion folded along an upper edge to be in surface contact with an outer surface thereof. A portion of the side plate 120 may be bent so that the folding portion 121 is formed, and the folding portion 121 may be formed to increase a thickness of the side plate 120 along a width direction. The folding portion 121 may be formed to have a length corresponding to approximately half of a height direction (a z-axis direction) of the side plate 120.

A bent portion 121a may protrude from an end portion of the folding portion 121 so as to protrude in a side surface direction of the side plate 120. In particular, a portion of the folding portion 121 formed outside the side plate 120 may be bent so that the bent portion 121a may protrude from the side plate.

The side plate 120 at which the folding portion 121 and the bent portion 121a may be formed by roll forming. In particular, the side plate made of a SUS material or a steel material may be processed by the roll forming. Thus, it is possible to prevent increased costs due to enlargement of a facility required for a part of a long battery module and prevent increased facility investment cost.

One reason why the bent portion 121a protrudes from a side surface of the side plate 120 is to allow the battery module 200 to be coupled to the frame portion 100 by a fastening member so that the battery module 200 is stably fixed to the frame portion 100. To this end, a plurality of bolt holes 121b may be formed in the bent portion 121a for coupling fastening members such as bolt members or the like.

A bending support portion 121c may be formed at a lower portion of the side plate 120. The bending support portion 121c may be bent at a lower edge of the side plate 120, and may be formed at the lower portion of the side plate 120 to support a lower portion of the battery cell 111.

Thus, the battery cell 111 may be stably fixed in a state in which the battery cell 111 is accommodated inside the frame portion 100.

As shown in FIG. 7, an insulating film 123 may be attached to a side surface of the side plate 120 contacting the battery cell 111. A portion of the insulating film 123 may protrude upward from the side plate 120 in a state in which it is attached to an entire surface where the battery cell 111 is in contact with the side plate 120.

A pair of the side plates 120 may be connected to each other by a pair of the end plates 130. The plurality of battery modules 200 may be inserted into the frame portion 100, and the plurality of battery modules 200 may be disposed in two rows. While the present embodiment describes the plurality of battery modules 200 as being disposed in two rows inserted into the frame portion 100, the present disclosure is not necessarily limited thereto. For example, the battery module 200 may be inserted as a single row in the frame portion 100 in a state in which the insulating plate 140 (described below) is removed.

The insulating plate 140 may be installed at a position between rows of the plurality of battery modules 200. Both ends of the insulating plate 140 may be connected to the pair of end plates 130 at a position between the pair of side plates 120.

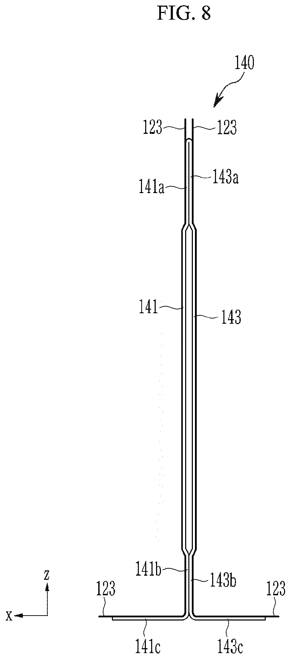

FIG. 8 is a cross-sectional view schematically showing the insulating plate according to the first embodiment of the present disclosure.

As shown in FIG. 8, the insulating plate 140 may include first and second insulating plates 141 and 143. Both ends of the first and second insulating plates 141 and 143 may be connected to the pair of end plates 130. The first and second insulating plates 141 and 143 may be welded and coupled to each other in a state in which the first and second insulating plates 141 and 143 are connected to the pair of end plates 130.

The insulating plate 140 may include the first insulating plate 141 that has both of its ends connected to side surfaces of the plurality of end plates 130 to support the side surfaces of the plurality of battery cells. The second insulating plate 143 that has a portion welded to a side surface of the first insulating plate 141 and has both ends connected to the side surfaces of the plurality of end plates 130 to support the side surfaces of the plurality of battery cells.

The first insulating plate 141 may be installed to support side surfaces of the plurality of battery cells 111 disposed in a first row among the battery cells 111 that are disposed in two rows. A portion of the first insulating plate 141 along a length direction may be formed to be bent in a state in which both ends of the first insulating plate 141 are connected to the pair of end plates 130. One reason why the portion of the first insulating plate 141 along the length direction is bent is to couple the bent portion to the second insulating plate 143 by contacting the bent portion with the second insulating plate 143. Another reason why the portion of the first insulating plate 141 along the length direction is bent is to apply an adhesive to a space formed between the bent portion of the first insulating plate 141 and side surfaces of the battery cells 111.

In some embodiments, a side surface of the first insulating plate 141 may support the side surfaces of the battery cells 111, a first upper bent portion 141a may be formed at an upper portion of the first insulating plate 141, and a first lower bent portion 141b may be formed at a lower portion of the first insulating plate 141. The first upper bent portion 141a and the first lower bent portion 141b may be bent so that a space is formed between the first upper bent portion 141a and the first lower bent portion 141b and the side surface of the battery cell 111.

The second insulating plate 143 may be installed to support side surfaces of the plurality of battery cells 111 disposed in a second row among the battery cells 111 that are disposed in two rows. A portion of the second insulating plate 143 along a length direction may be formed to be bent in a state in which both ends of the second insulating plate 143 are connected to the pair of end plates 130.

A side surface of the second insulating plate 143 may support the side surfaces of the battery cells 111, a second upper bent portion 143a may be formed at an upper portion of the second insulating plate 143, and a second lower bent portion 143b may be formed at a lower portion of the second insulating plate 143.

In a state in which the first insulating plate 141 and the second insulating plate 143 are disposed adjacent to each other, the first and second upper bent portions 141a and 143a may be in surface contact with each other, and the first and second lower bent portions 141b and 143b may be in surface contact with each other. Portions of the first and second upper bent portions 141a and 143a and portions of the first and second lower bent portions 141b and 143b that are in surface contact with each other may be welded and coupled to each other.

Each of the first and second upper bent portions 141a and 143a and the first and second lower bent portions 141b and 143b may be formed so as to be retracted from positions of side surfaces of the first and second insulating plates 141 and 143 that are in contact with the battery cells 111. Thus, welding heat may not be transferred to the side surfaces of the first and second insulating plates 141 and 143 during a process in which the first and second upper bent portions 141a and 143a and the first and second lower bent portions 141b and 143b are welded to each other, and the durability of the first and second insulating plates 141 and 143 is thereby improved.

A first bending support portion 141c that supports a lower surface of the battery module may be formed at a lower portion of the first insulating plate 141. In some embodiments, a second bending support portion 143c that supports the lower surface of the battery module may be formed at a lower portion of the second insulating plate 143. The first bending support portion 141c and the second bending support portion 143c may protrude in opposite directions and be formed to support lower portions of the battery cells 111 in different rows.

The insulating film 123 may be attached to the side surfaces of the first and second insulating plates 141 and 143.

As described above, in the battery pack 300 of the present embodiment, the side plate 120 supporting the battery cells 111 may be formed of a SUS material or a steel material and rigidity of a plate portion where the battery module 200 is connected to the frame portion 100 may be further improved, so that durability thereof is improved. Further, because the side plate 120 is manufactured using a roll forming method, a facility required for manufacturing the battery pack may be minimized so that a manufacturing cost is minimized.

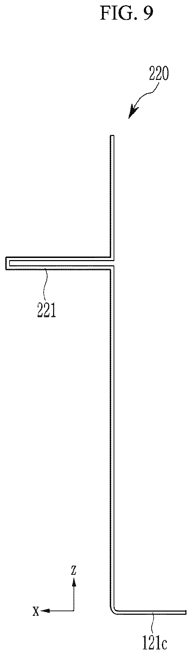

FIG. 9 is a cross-sectional view schematically showing a side plate according to a second embodiment of the present disclosure. In the following description, the same reference numerals as those in FIGS. 1 to 8 denote the same or similar member features having the same or similar function. Thus, detailed descriptions of the same reference numerals for each of other embodiments described below will be omitted.

As shown in FIG. 9, the side plate 220 according to the second embodiment of the present disclosure may have one side surface supporting side surfaces of the plurality of battery cells 111, and the side plate 220 may include a bent connection portion 221 protruding in a direction of the other side surface by bending a portion of a side surface of the side plate 220. The bent connection portion 221 may have a portion between an upper edge and a lower edge of the side plate 220 and protrude outward. The bent connection portion 221 may protrude in an outer direction of the side plate 220 in an approximate flange shape without welding. The bent connection portion 221 may protrude outward such that a portion of the side plate 220 is overlapped, and the bent connection portion 221 may protrude to have a thickness approximately twice or more that of the side plate 220.

A plurality of screw holes (not shown) may be formed at the bent connection portion 221. Fastening members such as a bolt members or the like may be inserted to the screw holes to fix the bent connection portion to the frame portion 100 shown in FIG. 2.

The bending support portion 121c may be formed at a lower portion of the bent connection portion 221. The bending support portion 121c may be formed at a lower edge of the side plate 220. That is, the bending support portion 121c may be formed at a lower portion of the side plate 220 to support lower portions of the battery cells 111.

The side plate 220 in which the bent connection portion 221 and the bending support portion 121c are formed may be formed by roll forming. A height of the side plate 220 may be determined depending on heights of the battery cells. Further, a height of the bent connection portion 221 may be determined according to a height of a bolt member that is fastened to the frame portion 100. In some embodiments, a protruding length of the bent connection portion 221 may be determined depending on a size of a head portion of the bolt member.

An insulating film (not shown) may be attached to a surface of the side plate 220 contacting the battery cells 111.

As described above, the side plate 220 of the second embodiment of the present disclosure may be more stably fixed to the frame portion 100 by two-layer overlapping protruding shapes of the bent connection portion 221. Thus, durability of the side plate 220 is improved.

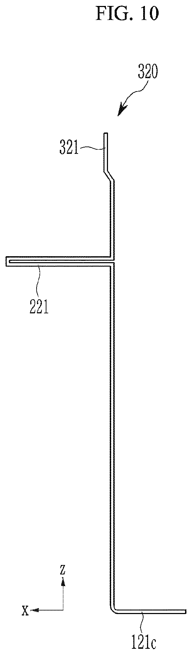

FIG. 10 is a cross-sectional view schematically showing a side plate according to a third embodiment of the present disclosure. In the following description, the same reference numerals as those in FIGS. 1 to 9 denote the same or similar members having the same or similar functions. Hereinafter, detailed descriptions of the same reference numerals are omitted.

As shown in FIG. 10, an avoiding bent portion 321 that is bent in a direction of the bent connection portion 221 may be formed at an upper edge of a side plate 320 of the third embodiment. The avoiding bent portion 321 may be formed to be bent outside the side plate 320 (that is, in a side surface direction in which the bent connection portion 221 is connected).

The avoiding bent portion 321 may be formed by bending a portion of the upper edge of the side plate 320 in an outer direction of the side plate 320. The avoiding bent portion 321 may prevent a damage caused by an insulating film (not shown) attached to an inner surface of the side plate 320 interfering with an upper edge portion of the side plate 320.

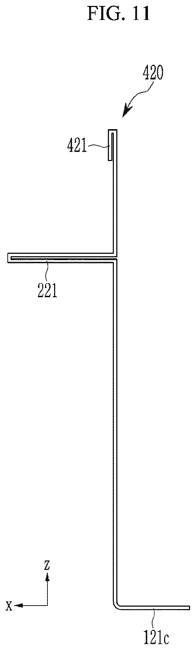

FIG. 11 is a cross-sectional view schematically showing a side plate according to a fourth embodiment of the present disclosure. In the following description, the same reference numerals as those in FIGS. 1 to 10 denote the same or similar members having the same or similar functions. Hereinafter, detailed descriptions of the same reference numerals are omitted.

As shown in FIG. 11, the side plate 420 according to the fourth embodiment may include a folded portion 421 in which a portion of an upper edge of the side plate 420 is folded in an outer direction of the side plate 420. The folded portion 421 of the fourth embodiment may prevent damage caused by an insulating film (not shown) attached to an inner surface of the side plate 420 interfering with an upper edge portion of the side plate 420.

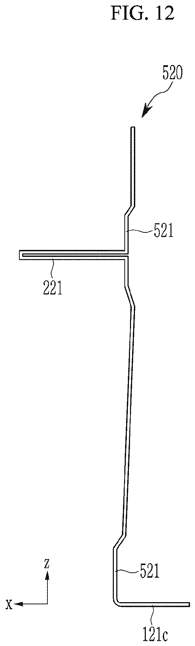

FIG. 12 is a cross-sectional view schematically showing a side plate according to a fifth embodiment of the present disclosure. In the following description, the same reference numerals as those in FIGS. 1 to 11 denote the same or similar members having the same or similar functions. Hereinafter, detailed descriptions of the same reference numerals are omitted.

As shown in FIG. 12, a portion of one side surface of the side plate 520 according to the fifth embodiment of the present disclosure may be connected to side surfaces of the plurality of battery cells by an adhesive (not shown). To this end, an adhesive bent portion 521 bent may be formed at a portion of the side plate 520 where the adhesive is applied. The adhesive bent portion 521 refers to a portion of the side plate 520 that is bent outward to form a space where the adhesive is applied between the adhesive bent portion 521 and side surfaces of the battery cells 111. The adhesive bent portion 521 may be formed at a lower portion where the bending support portion 121c is connected and below where the bent connection portion 221 is formed.

Because the adhesive is applied to the adhesive bent portion 521, the side plate 520 may be stably fixed to the battery cells 111 to stably support the battery cells 111 in an insulating state. The adhesive may be applied to an upper portion, a lower portion, and a middle portion of the side plate 520 and to the adhesive bent portion 521 to thereby provide stable adhesive fixation of the side plate 520 to the battery cells 111. The adhesive may be a structural adhesive, may be a fast-curing polyurethane type adhesive, and may be applied to a surface of the adhesive bent portion 521 at a thickness of 0.2 mm to 1 mm.

The side plate 520 at which the adhesive bent portion 521 is formed may be formed by roll forming.

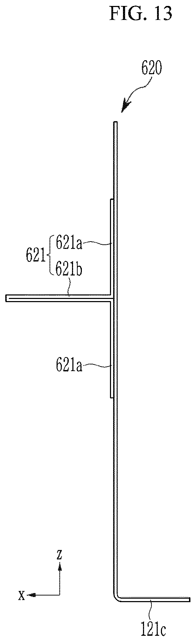

FIG. 13 is a cross-sectional view schematically showing a side plate according to a sixth embodiment of the present disclosure. In the following description, the same reference numerals as those in FIGS. 1 to 12 denote the same or similar members having the same or similar functions. Hereinafter, detailed descriptions of the same reference numerals are omitted.

As shown in FIG. 13, the side plate 620 according to the sixth embodiment of the present disclosure may have one side surface supporting side surfaces of the plurality of battery cells 111, and the side plate 620 may have an outer surface coupled to a connection flange 621 that is coupled to the frame portion 100.

The connection flange 621 may protrude from the side plate 620 and be in surface contact with an outer side surface of the side plate 620. Further, the connection flange 621 may be detachably coupled to the frame portion 100 by a fastening member.

The connection flange 621 may include a connection plate 621a coupled to the outer surface of the side plate 620, and a connection protruding portion 621b protruding to outside of the connection plate 621a to be connected to the frame portion 100. The connection plate 621a may be welded in a state in which the connection plate is in surface contact with the side surface of the side plate 620. That is, the connection plate 621a may be welded to a portion of the side surface of the side plate 620.

With the connection protruding portion 621b protruding from the side surface of the connection plate 621a, and a plurality of screw holes (not shown) may be formed so that the connection protruding portion may be detachably coupled to the frame portion 100 by a bolt member.

The side plate 620 may be formed by roll forming.

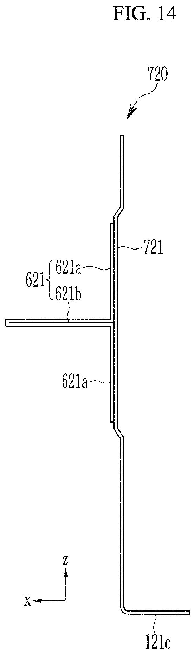

FIG. 14 is a cross-sectional view schematically showing a side plate according to a seventh embodiment of the present disclosure. In the following description, the same reference numerals as those in FIGS. 1 to 13 denote the same or similar members having the same or similar functions. Hereinafter, detailed descriptions of the same reference numeral are omitted.

As shown in FIG. 14, in the side plate 720 according to the seventh embodiment of the present disclosure, a portion of the side plate to which the connection plate 621a is coupled may be bent so that a bonding bent portion 721 spaced apart from an outer surface of the battery cell is formed. The bonding bent portion 721 may form a space in which an adhesive may be applied between the bonding bent portion 721 and outer surfaces of the battery cells 111 so that it is possible to stably support the battery cells 111 in an insulating state using the side plate 720.

The side plate 120 at which the bonding bent portion 721 is formed may be formed by roll forming.

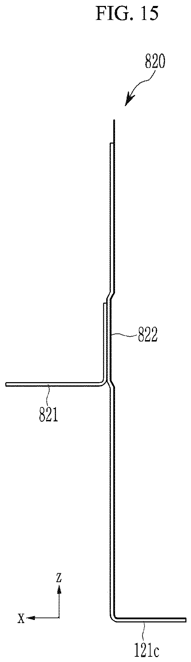

FIG. 15 is a cross-sectional view schematically showing a side plate according to an eighth embodiment of the present disclosure. In the following description, the same reference numerals as those in FIGS. 1 to 14 denote the same or similar members having the same or similar functions. Hereinafter, detailed descriptions of the same reference numerals are omitted.

As shown in FIG. 15, the side plate 820 according to the eighth embodiment of the present disclosure may have one side surface supporting side surfaces of the plurality of battery cells 111, and the side plate 820 may have an outer surface coupled to a bent flange 821 that is coupled to the frame portion 100.

One side of the bent flange 821 may be coupled to a side surface of the side plate 820, and a portion of the bent flange 821 may protrude from the side surface of the side plate 820 in a state in which the portion of the bent flange is bent at an angle of approximately 90 degrees. The bent flange 821 may be detachably coupled to the frame portion 100 by a bolt member. A bonding bent portion 822 may be formed at a portion where the bent flange 821 is coupled to the side plate 820. Thus, an adhesive may be applied between the battery cell 111 and the bonding bent portion 822, so that the battery cell 111 and the side plate 820 may be bonded to each other.

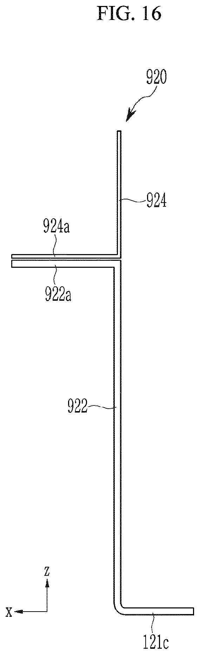

FIG. 16 is a cross-sectional view schematically showing a side plate according to a ninth embodiment of the present disclosure. In the following description, the same reference numerals as those in FIGS. 1 to 15 denote the same or similar members having the same or similar functions. Hereinafter, detailed descriptions of the same reference numerals are omitted.

As shown in FIG. 16, in the side plate 920 according to the ninth embodiment of the present disclosure, a first side portion 922 and a second side portion 924 may be welded and coupled to each other. The first side portion 922 may have one side surface supporting side surfaces of the plurality of battery cells 111, and the first side portion 922 may have an upper end edge of the first side portion 922 may include a first bent portion 922a bent outward. The bending support portion 121c may be bent at a lower portion of the first side portion 922 to support lower portions of the battery cells 111.

The second side portion 924 may be coupled to an upper portion of the first side portion 922 and a lower end edge of the second side portion 924 may be bent outward. The second side portion 924 may include a second bent portion 924a coupled to the first bent portion 922a.

The first bent portion 922a and the second bent portion 924a may be formed to have the same length and may be welded and coupled. The first and second bent portions 922a and 924a may protrude from one side of the side plate 920 to be coupled to the frame portion 100. To this end, the first bent portion 922a and the second bent portion 924a may include a plurality of screw holes (not shown) formed in a state in which the first bent portion 922a and the second bent portion 924a are welded. The first and second bent portions 922a and 924a may therefore be detachably coupled to the frame portion 100 by fastening members inserted into the screw holes.

The first side portion 922 and the second side portion 924 may be formed by roll forming.

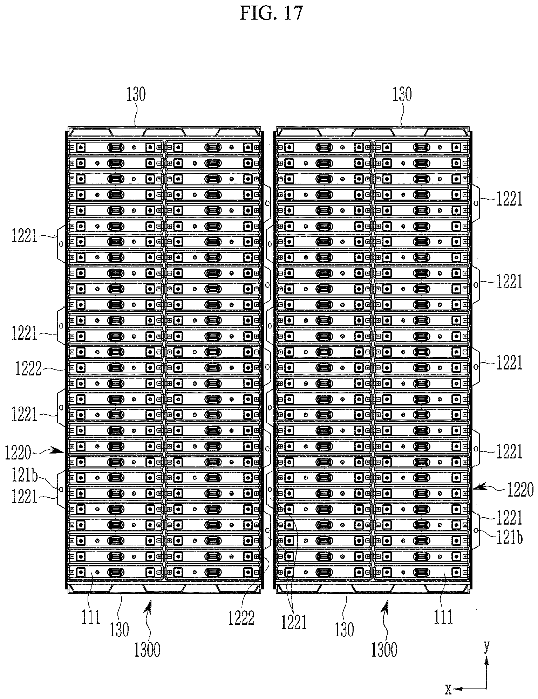

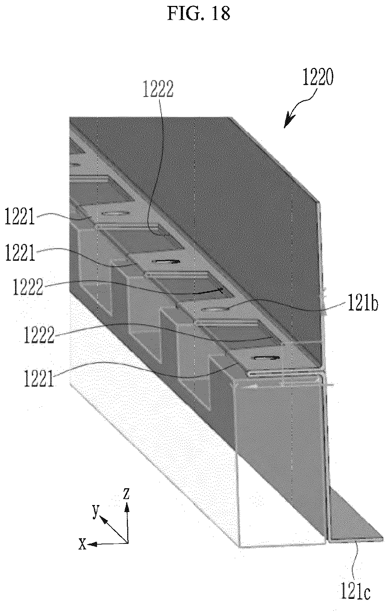

FIG. 17 is a plan view schematically showing a battery module in a state in which a cutout portion is formed at a side plate according to a tenth embodiment of the present disclosure, and FIG. 18 is a main portion perspective view schematically showing a state in which the side plate with the cutout portion of FIG. 17 is installed. In the following description, the same reference numerals as those in FIGS. 1 to 16 denote the same or similar members having the same or similar functions. Hereinafter, detailed descriptions of the same reference numerals are omitted.

As shown in FIG. 17 and FIG. 18, in the side plate 1220 of the battery module 1300 according to the tenth embodiment of the present disclosure, cutout portions 1222 may be formed between a plurality of screw holes 121b in a bending portion 1221.

The cutout portions 1222 may be cut in trapezoidal shapes between the plurality of screw holes 121b. But the cutout portions 1222 are not necessarily limited to a trapezoidal shape, and the cutout portions 122 may be changed to various polygonal shapes.

A cut width of the cutout portions 1222 may be larger than a width of the bending portion 1221 in which the screw hole 121b is formed. Thus, if a pair of battery modules 1300 are disposed inside the frame portion 100 as shown in FIG. 17, pairs of bending portions 1221 adjacent to each other may be disposed in a state in which the pairs of bending portions spaced between a plurality of cutout portions 1222. Accordingly, in the pair of battery modules 1300, a plurality of bending portions 1221 may be inserted into the plurality of cutout portions 1222 in a zigzag disposition. Thus, it is possible to optimize an installation space by minimizing a separation distance between the pair of battery modules 1300.

While this disclosure has been described in connection with what is presently considered to be practical embodiments, it is to be understood that the disclosure is not limited to the disclosed embodiments. On the contrary, the disclosure is intended to cover various modifications and equivalent arrangements included within the scope of the appended claims.

### <Description of symbols>

10: first side frame; 11: fastening member;
20: second side frame; 30: first end frame;
40: second end frame; 50: lower cover;
60: upper cover; 100: frame portion;
111: battery cell; 120: side plate;
121: folding portion; 121a: bending portion;
121b: bolt hole; 121c: bending support portion;
123: insulating film; 130: end plate;
140: insulating plate; 141: first insulating plate;
141a: first upper bent portion; 141b: first lower bent portion;
141c: first bending support portion; 143: second insulating plate;
143a: second upper bent portion; 143b: second lower bent portion;
143c: second bending support portion; 200: battery module;
220: side plate;
221: bent connection portion; 300: battery pack; 320: side plate;
321: avoiding bent portion; 420: side plate;
421: folded portion; 520: side plate;
521: adhesive bent portion; 620: side plate;
621: connection flange; 720: side plate;
721: bonding bent portion; 820: side plate;
821: bent flange; 920: side plate;
922: first side portion; 922a: first bent portion;
924: second side portion; 924a: second bent portion;
1220: side plate;
1221: bending portion; 1222: cutout portion;
1300: battery module;

## Claims

1. A battery pack (300) comprising:
a frame portion (100) forming an accommodation space;
a plurality of battery modules (200, 1300) positioned in the accommodation space of the frame portion (100);
a lower cover (50) that covers a lower portion of the frame portion (100); and
an upper cover (60) that covers an upper portion of the frame portion (100),
wherein each of the battery modules (200, 1300) comprises:
a plurality of battery cells (111);
a plurality of side plates (120, 220, 320, 420, 520, 620, 720, 820, 920, 1220) including bent portions that are coupled to the frame portion (100) and support side surfaces of the battery cells (111); and
a plurality of end plates (130) that connect ends of the side plates to each other.

2. The battery pack (300) as claimed in claim 1, wherein each of the side plates includes an inner surface that supports the side surfaces of the of battery cells (111), and each of the side plates is bent along an upper edge to form a folded portion (121, 421) that is in contact with a surface of the side plate.

3. The battery pack (300) as claimed in claim 2, wherein an end portion of the folded portion includes a bent portion (121a) protruding from the side plate.

4. The battery pack as claimed in claim 3, wherein each of the bent portions includes a plurality of screw holes (121b) and a plurality of cutout portions (1222) are formed between the plurality of screw holes, and
wherein fastening members are inserted into the screw holes to fix the bent portion to the frame portion (100); and, optionally,
wherein the cutout portions are formed in trapezoidal shapes.

5. The battery pack (300) as claimed in any one of claims 1 to 4, wherein each of the side plates includes a bending support portion (121c) formed at a lower portion of the side plate that supports a lower surface of the battery module (200, 1300); and, optionally,
wherein each of the side plates is roll formed.

6. The battery pack (300) as claimed in claim 1, wherein each of the side plates includes a side surface that supports the side surfaces of the battery cells (111) and the side surface includes a bent connection portion (221) that is bent and protrudes in a direction away from the side surfaces of the battery cells (111); and, optionally,
wherein an avoiding bent portion (321) is formed at an upper edge of each of the side plates, with the avoiding bent portion being bent in the direction away from the side surfaces of the battery cells (111).

7. The battery pack (300) as claimed in claim 1, wherein a portion of one side surface of each of the side plates is connected to the side surfaces of the battery cells (111) using an adhesive, and
wherein each of the side plates includes an adhesive bent portion (521) that is spaced apart from the side surfaces of the battery cells (111) at a portion of the side plate where the adhesive is applied.

8. The battery pack (300) as claimed in claim 1, wherein each of the side plates includes a first side surface that supports the side surfaces of the battery cells (111) and a second side surface that is coupled to a connection flange (621) coupled to the frame portion (100), and
wherein the connection flange includes a connection plate (621a) coupled to the second side surface of the side plate and a connection protruding portion (621b) protruding in a direction away from the side plate to be coupled to the frame portion (100).

9. The battery pack (300) as claimed in claim 8, wherein a portion of each of the side plates to which the connection plates are coupled is bent so that a bonding bent portion (721) spaced apart from the side surfaces of the battery cells (111) is formed; and
wherein an adhesive is applied between the bonding bent portion (721) and the side surfaces of the battery cells (111).

10. The battery pack (300) as claimed in claim 1, wherein each of the side plates comprises:
a first side portion (922) that includes a side surface supporting the side surfaces of the battery cells (111), wherein an upper end of the first side portion includes a first bent outward portion (922a) that is bent in a direction away from the battery cells (111); and
a second side portion (924) that is coupled to an upper end of the first side portion, wherein a lower end of the second side portion includes a second bent outward portion (924a) that is bent outward in the direction away from the battery cells (111) and is coupled to the first bent outward portion; and, optionally,
wherein the first side portion and the second side portion are roll formed.

11. The battery pack (300) as claimed in any one of claims 1 to 10, further comprising an insulating plate (140) that includes a first end connected to a side surface of one of the end plates (130), a second end connected to a side surface of another of the end plates (130), and side surfaces supporting the side surfaces of the battery cells (111).

12. The battery pack (300) as claimed in claim 11, wherein the insulating plate comprises:
a first insulating plate (141) that includes ends connected to side surfaces of the end plates (130) to support the side surfaces of the battery cells (111); and
a second insulating plate (143) that includes a portion welded to a side surface of the first insulating plate and ends connected to the side surfaces of the end plates (130) to support the side surfaces of the battery cells (111).

13. The battery pack (300) as claimed in claim 12, wherein the first insulating plate is bent along a lower edge thereof to form a first bending support portion (121c) supporting a lower surface of the battery module (200, 1300), and the second insulating plate is bent along the lower edge thereof to form a second bending support portion (143c) supporting the lower surface of the battery module (200, 1300).

14. The battery pack (300) as claimed in claim 13, wherein a first upper bent portion (141a) is formed at an upper portion of the first insulating plate (141) and a first lower bent portion (141b) is formed at a lower portion of the first insulating plate (141), a second upper bent portion (143a) is formed at an upper portion of the second insulating plate (143) and a second lower bent portion (143b) is formed at a lower portion of the second insulating plate (143), and
wherein the first upper bent portion (141a) and the second upper bent (143a) portion are welded to each other and the first lower bent portion (141b) and the second lower bent portion (143b) are welded to each other.

15. The battery pack (300) as claimed in any one of claims 1 to 14, wherein an insulating film (123) is attached to an inner surface of each of the side plates.
